Europäisches Patentamt

European Patent Office

Office européen des brevets

(11) Veröffentlichungsnummer : **0 011 249**
**B1**

# (12) EUROPÄISCHE PATENTSCHRIFT

(45) Veröffentlichungstag der Patentschrift :
**22.09.82**

(21) Anmeldenummer : **79104398.7**

(22) Anmeldetag : **08.11.79**

(51) Int. Cl.³ : **C 03 C 13/00, C 04 B ·31/06, C 03 C 25/02**

(54) **Herstellung und Zusammensetzung von Mineralfasern zur Mikroarmierung von Bindemitteln oder Baustoffen.**

(30) Priorität : **10.11.78 DE 2848731**

(43) Veröffentlichungstag der Anmeldung :
**28.05.80 (Patentblatt 80/11)**

(45) Bekanntmachung des Hinweises auf die Patenterteilung : **22.09.82 Patentblatt 82/38**

(84) Benannte Vertragsstaaten :
**AT BE CH DE FR GB IT LU NL SE**

(56) Entgegenhaltungen :
**DD A 90 983**
**FR A 2 332 243**
**GB A 1 505 609**
**GB A 1 517 448**
**US A 3 377 233**
**US A 3 854 986**
**US A 3 953 185**

(73) Patentinhaber : **Werhahn & Nauen**
**Königstrasse 84**
**D-4040 Neuss (DE)**

(72) Erfinder : **Därr, Georg-Michael, Prof. Dr.-Ing.**
**Höllsteinstrasse 58b**
**D-6380 Bad Homburg v.d.H. (DE)**
Erfinder : **Gaar, Hans, Dipl.-Chem.**
**Niederhöchstädter Strasse 18**
**D-6374 Steinbach (DE)**
Erfinder : **Grünthaler, Karl-Heinz, Dr. rer.nat.**
**Mozartstrasse 6a**
**D-6390 Usingen (DE)**

(74) Vertreter : **Blum, Klaus-Dieter, Dipl.-Ing.**
**Am Römerhof 35**
**D-6000 Frankfurt/Main 90 (DE)**

Imprimerie Jouve, 18, rue St-Denis, 75001 Paris, France

Herstellung und Zusammensetzung von Mineralfasern zur Mikroarmierung von Bindemitteln oder Baustoffen

Die Erfindung bezieht sich auf ein Verfahren zur Herstellung von in alkalischen Medien beständigen Mineralfasern zur Mikroarmierung von zement-, kalk- und/oder gipsgebundenen oder bituminösen Bindemitteln oder Baustoffen, bei dem Ergußgesteinen $ZrO_2$ zugesetzt und diese Mischung bei Temperaturen zwischen 1 350 °C und 1 500 °C geschmolzen und anschließend aus der Schmelze Fasern mit einem Durchmesser von 10 bis 20 µm hergestellt und durch eine Wärmebehandlung bei einer Temperatur zwischen 650 °C und 900 °C rekristallisiert werden. Die Zusammensetzung der Fasern gehört ebenfalls zu der Erfindung.

Die Einsatzmöglichkeit vieler Baumaterialien, wie Zement, Beton, Gips, Kalk oder anderen, wird durch deren geringe Zug- und Biegefestigkeit sowie Biegezähigkeit stark eingeschränkt. Es ist bereits bekannt, durch sogenannte Mikroarmierung, nämlich durch Zugabe von Fasermaterialien zu dem Bindemittel oder Baustoff, die vorerwähnten Eigenschaften zu verbessern. Die hierzu verwendeten Fasermaterialien sind entweder natürlichen Ursprungs, wie Asbest- oder Pflanzenfasern, oder es sind künstliche Fasern aus Stahl, Glas, organischen Polymeren oder Kohle. Die Untersuchung der Eignung dieser Fasern als Verstärkungsmaterial für zement-, gips- und kalkgebundene sowie bituminöse Baustoffe hat in den meisten Fällen nur unzureichende Ergebnisse erbracht.

Dabei spielen umweltrelevante Gesichtspunkte, z.B. bei Verwendung von Asbest, als auch werkstoffspezifische Fragen eine wesentliche Rolle.

Auch die anfangs als geeignet angesehenen handelsüblichen Glasfasern haben sich schließlich wegen ihrer chemischen Zusammensetzung und Struktur als nicht ausreichend beständig in alkalischem Medium erwiesen, so daß ihre günstigen mechanischen Eigenschaften, vornehmlich ihre Zugfestigkeit, wegen der von der Oberfläche ausgehenden Korrosion der Glasfasern in zementgebundenen Baustoffen verloren gehen.

Zur Verhinderung des Angriffs der alkalischen Lösung wurden bereits die Glasfasern mit alkalibeständigen Schichten versehen (z.B. US-A- 3 377 233, US-A- 3 854 986). Hierdurch konnte der Angriff an Faserbruchstellen und an Schutzschichtdefekten nicht verhindert werden. Als weiterer schwerwiegender Nachteil trat hinzu, daß durch die Schutzschicht die Haftung der Fasern in der Bindemittelmatrix vermindert wurde, wodurch die beabsichtigte Verbundwirkung weitgehend verloren ging und sich die mechanischen Eigenschaften erheblich verschlechterten.

Es ist bekannt, daß die Alkalibeständigkeit von Glasfasern durch Zugabe von $ZrO_2$ erhöht werden kann (z.B. GB-A- 1 517 448). Ferner wurden bereits Fasern mit hoher Alkalibeständigkeit beschrieben, die aus 85 bis 99 Gew.-% Basalt und 1 bis 15 Gew-% $ZrO_2$ bestehen (GB-A- 1 505 609). Aber auch mit diesen Methoden lassen sich keine zufriedenstellenden Ergebnisse erzielen.

Der Erfindung liegt nun die Aufgabe zugrunde, die geschilderten Nachteile bekannter Mikroarmierungen von Bindemitteln und Baustoffen der genannten Art zu überwinden und ein Verfahren zu entwickeln, mit dem in alkalischem Medium beständige Mineralfasern hoher Zugfestigkeit aus einem in ausreichender Menge und zu geringem Preis zur Verfügung stehenden Rohstoff hergestellt werden können. Auf eine hohe Haftung zwischen den Fasern und der Matrix wird ebenfalls großer Wert gelegt.

Es hat sich nun gezeigt, daß sich diese Aufgabe in technisch fortschrittlicher Weise lösen läßt, wenn bei einem Verfahren der eingangs genannten Art als Ausgangsmaterial ein Gemisch aus Ergußgesteinen, gegebenenfalls mit einem Zusatz von $TiO_2$, in der folgenden Zusammensetzung, bezogen auf die rein oxidischen Bestandteile, verwendet wird :

| | |
|---|---|
| $SiO_2$ | 48-51 Masse-% |
| $Al_2O_3$ | 12-14 Masse-% |
| $Fe_2O_3$ | 8-10 Masse-% |
| CaO | 6- 8 Masse-% |
| MgO | 10-12 Masse-% |
| $TiO_2$ | 2- 6 Masse-% |
| $ZrO_2$ | 4- 6 Masse-% |
| $K_2O$ + $Na_2O$ bis max. | 5 Masse-% |

Das Zirkonoxid wird vorteilhafterweise in Form von Zirkonsilikat dem Ausgangsmaterial aus Ergußgesteinen zugegeben.

Die Rekristallisation der Fasern kann durch eine maximal 1 Minute dauernde Wärmebehandlung bei einer Temperatur zwischen 800 °C und 900 °C herbeigeführt werden. In anderen Fällen hat sich eine zweistufige Wärmebehandlung der Mineralfasern zur Rekristallisation als zweckmäßig erwiesen, wobei in der ersten Stufe die Temperatur zwischen 650 °C und 750 °C und in der zweiten Stufe zwischen 800 °C und 900 °C lag.

Die erfindungsgemäßen Mineralfasern zur Mikroarmierung von zement-, kalk- und/oder gipsgebundenen oder bituminösen Bindemitteln oder Baustoffen weisen folgende Zusammensetzung auf:

|                       |          |
|-----------------------|----------|
| SiO$_2$               | 48 bis 51 |
| Al$_2$O$_3$           | 12 bis 14 |
| Fe$_2$O$_3$           | 8 bis 10 |
| CaO                   | 6 bis 8 |
| MgO                   | 10 bis 12 |
| TiO$_2$               | 2 bis 6 |
| ZrO$_2$               | 4 bis 6 |
| K$_2$O + Na$_2$O bis max. | 5 |

Weitere Merkmale, Vorteile und Anwendungsmöglichkeiten der Erfindung gehen aus der folgenden Beschreibung zusätzlicher Details hervor.

Durch das günstige Temperatur-Viskositätsverhalten der erfindungsgemäß verwendeten Glaszusammensetzung besteht im Gegensatz zu den üblichen Verfahren der Stein- und Mineralwolleherstellung (Ausschleudern aus der Schmelze) die Möglichkeit, Endlosfasern aus einer Ziehwanne herzustellen. Dadurch wird eine breite Basis für die Produktherstellung getroffen, da die Fasern auch als Gewebe oder Bündel (sogenannte Rovings) in die Matrix eingelagert werden können.

## Beispiel 1

Charakteristisch für die Erfindung ist die Beständigkeit der Glasfasern im alkalischen Medium, die durch Zusatz von Zirkonoxid erreicht wird. Die Messungen in siedender, wäßriger Portlandzementlösung ergeben bei einer Glaszusammensetzung aus

|            |        |        |           |
|------------|--------|--------|-----------|
| SiO$_2$    | etwa   | 49,2   | Masse-% |
| Al$_2$O$_3$ | "      | 12,7   | " |
| Fe$_2$O$_3$ | "      | 9,2    | " |
| CaO        | "      | 7,2    | " |
| MgO        | "      | 10,7   | " |
| K$_2$O + Na$_2$O | " | 4,8    | " |
| TiO$_2$    | "      | 2,0    | " |
| ZrO$_2$    | "      | 4,2    | " |

nach 24-stündiger Auslaugung eine Auslaugrate von $70 \cdot 10^{-6}$ g/cm$^2$ ; im Vergleich dazu wurde bereits nach 6 Stunden für ein Borsilikatglas eine Auslaugung von $250 \cdot 10^{-6}$ g/cm$^2$ ermittelt.

Der angegebene Bereich der Glaszusammensetzung stellt in diesem Beispiel ein Optimum dar ; geringe Abweichungen führen zu überraschend starken Verschlechterungen der Beständigkeit im alkalischen Medium. Dies gilt ganz besonders für das Verhältnis des CaO/MgO/Fe$_2$O$_3$-Anteils. Wie auch die nachstehenden Versuchsergebnisse bestätigen, ist die Beständigkeit im alkalischen Medium, bestimmt durch den Masseverlust, den das Glas bei Auslaugung erleidet, nur bei einem Verhältnis CaO ; MgO = 0,5 bis 0,8 und bei einem Fe$_2$O$_3$-Gehalt von 8 bis 10 Masse-% sehr hoch ; die prozentualen Anteile der übrigen Komponenten lagen innerhalb der zuvor angegebenen Grenzen.

| Glas-Nr. | CaO : MgO | Fe$_2$O$_3$-Gehalt (Masse-%) | Masseverlust (mg/dm$^3$) |
|----------|-----------|------------------------------|--------------------------|
| 1 | 1,5 | 4,7 | 36 |
| 2 (Beispiel 1) | 0,67 | 9,2 | 7,5 |
| 3 | 0,48 | 10,5 | 10 |
| 4 | 0,72 | 14,0 | 22 |

## Beispiel 2

Die Beständigkeit im alkalischen Medium konnte bei den Materialien nach Beispiel 1 noch weiter verbessert werden, wenn die Glasfasern einer kurzzeitigen, gesteuerten Rekristallisationsbehandlung unterzogen wurden. Ein Zusatz von Titanoxid von max. 6 Masse-% erwies sich in diesem Fall als optimal. Hierdurch wurde eine feinkristalline Struktur ausgebildet und dadurch der bisher beobachtete Rückgang der Zugfestigkeit bei unerwünschter Rekristallisation in vertretbaren Grenzen gehalten, so daß eine ausreichende Zugfestigkeit für den beschriebenen Verwendungszweck gegeben war.

## Beispiel 3

Das Ausgangsmaterial hatte folgende Zusammensetzung :

| | | | |
|---|---|---|---|
| SiO$_2$ | etwa | 48,1 | Masse-% |
| Al$_2$O$_3$ | " | 12,4 | " |
| Fe$_2$O$_3$ | " | 9,1 | " |
| CaO | " | 7 | " |
| MgO | " | 10,5 | " |
| K$_2$O + Na$_2$O | " | 4,7 | " |
| TiO$_2$ | " | 4 | " |
| ZrO$_2$ | " | 4,2 | " |

Die Rekristallisation kann entweder in einem Schritt durch Wärmebehandlung bei 800 °C bis 900 °C vorgenommen werden oder aber in einer zweistufigen aufeinanderfolgenden Wärmebehandlung bei 650 °C bis 750 °C und 800 °C bis 900 °C. Die Behandlungszeiten liegen für optimale Zugfestigkeitswerte unter 1 Minute.

Durch diese Maßnahmen, nämlich durch die Titanoxidzugabe von max. 6 Masse-% und gesteurte Rekristallisation, wurde die Auslaugrate in siedender, wäßriger Portlandzementlösung nach 24 Stunden von 70 · 10$^{-6}$ g/cm$^2$ auf 10 · 10$^{-8}$ g/cm$^2$ gesenkt.

Zur Erhöhung der Haftfestigkeit der Mineralfasern in dem Matrixmaterial können die Fasern mit hydratisiertem oder unhydratisiertem Zementstaub oder mit Calciumsilikat bzw. Calciumsilikathydrat-Feinstaub bestäubt werden.

**Ansprüche**

1. Verfahren zur Herstellung von in alkalischen Medien beständigen Mineralfasern zur Mikroarmierung von zement-, kalk- und/oder gipsgebundenen oder bituminösen Bindemitteln oder Baustoffen, bei dem Ergußgesteinen ZrO$_2$ zugesetzt und diese Mischung bei Temperaturen zwischen 1 350 °C und 1 500 °C geschmolzen und anschließend aus der Schmelze Fasern mit einem Durchmesser von 10 bis 20 μm hergestellt und durch eine Wärmebehandlung bei einer Temperatur zwischen 650 °C und 900 °C rekristallisiert werden, dadurch gekennzeichnet, daß man ein Gemisch aus Ergußgesteinen, gegebenenfalls mit einem Zusatz von TiO$_2$ in der folgenden Zusammensetzung, bezogen auf die rein oxidischen Bestandteile, verwendet :

| | |
|---|---|
| SiO$_2$ | 48-51 Masse-% |
| Al$_2$O$_3$ | 12-14 Masse-% |
| Fe$_2$O$_3$ | 8-10 Masse-% |
| CaO | 6- 8 Masse-% |
| MgO | 10-12 Masse-% |
| TiO$_2$ | 2- 6 Masse-% |
| ZrO$_2$ | 4- 6 Masse-% |
| K$_2$O + Na$_2$O bis max. | 5 Masse-% |

2. Verfahren nach Anspruch 1, dadurch gekennzeichnet, daß das ZrO$_2$ in Form von ZrSiO$_4$ (Zirkonsilikat) zugegeben wird.

3. Verfahren nach Anspruch 1 oder 2, dadurch gekennzeichnet, daß die Wärmebehandlung bei einer Temperatur zwischen 800 °C und 900 °C bis zu max. 1 Minute erfolgt.

4. Verfahren nach einem der Ansprüche 1 bis 3, dadurch gekennzeichnet, daß die Wärmebehandlung zweistufig durchgeführt wird, wobei die Temperatur in der ersten Stufe zwischen 650 °C und 750 °C und in der zweiten Stufe zwischen 800 °C und 900 °C liegt.

5. Mineralfasern zur Mikroarmierung von zement-, kalk- und/oder gipsgebundenen oder bituminösen Bindemitteln oder Baustoffen, bestehend aus SiO$_2$, Al$_2$O$_3$, Fe$_2$O$_3$, CaO, MgO, TiO und ZrO$_2$, dadurch gekennzeichnet, daß sie die folgende Zusammensetzung in Masse-% aufweisen :

| | |
|---|---|
| SiO$_2$ | 48-51 |
| Al$_2$O$_3$ | 12-14 |
| Fe$_2$O$_3$ | 8-10 |
| CaO | 6- 8 |
| MgO | 10-12 |
| TiO$_2$ | 2- 6 |
| ZrO$_2$ | 4- 6 |
| K$_2$O + Na$_2$O bis max. | 5 |

**Claims**

1. Method for the production of mineral fibers resistant to alkaline media and for the micro-reinforcement of cement-, lime- and/or plasterbound or bituminous binders or building materials, which comprises adding $ZrO_2$ to the extrusive rocks and fusing said mixture at a temperature between 1 350 °C and 1 500 °C and preparing fibers having a diameter of 10 to 20 $\mu$m from said fused mixture and subjecting the fibers to a heat treatment at a temperature between 650 °C and 900 °C to achieve recrystallization, characterized in that a mixture of extrusive rocks, if necessary with an addition of $TiO_2$ is used, the composition of the mixture, related to the purely oxidic constituents being as follows :

| | |
|---|---|
| $SiO_2$ | 48-51 % Mass % |
| $Al_2O_3$ | 12-14 % Mass % |
| $Fe_2O_3$ | 8-10 % Mass % |
| CaO | 6- 8 % Mass % |
| MgO | 10-12 % Mass % |
| $TiO_2$ | 2- 6 % Mass % |
| $ZrO_2$ | 4- 6 % Mass % |
| $K_2O + Na_2$ up to max. | 5 % Mass % |

2. Method as claimed in claim 1, wherein the $ZrO_2$ is added in the form of $ZrSiO_4$ (zirconium silicate).

3. Method as claimed in claim 1 or 2, wherein the heat treatment is carried out at a temperature between 800 °C and 900 °C, the treatment time being one minute or less.

4. Method as claimed in any of the claims 1 to 3, wherein the heat treatment is carried out in two stages, the temperature of the first stage being between 650 °C and 750 °C and the temperature of the second stage being between 800 °C and 900 °C.

5. Mineral fibers for the micro-reinforcement of cement-, lime- and/or plasterbound or bituminous binders or building materials consisting of $SiO_2$, $Al_2O_3$, $Fe_2O_3$, CaO, MgO, $TiO_2$ and $ZrO_2$ characterized in that the composition of the fibers is as follows :

| | |
|---|---|
| $SiO_2$ | 48-51 % Mass % |
| $Al_2O_3$ | 12-14 % Mass % |
| $Fe_2O_3$ | 8-10 % Mass % |
| CaO | 6- 8 % Mass % |
| MgO | 10-12 % Mass % |
| $TiO_2$ | 2- 6 % Mass % |
| $ZrO_2$ | 4- 6 % Mass % |
| $K_2O + Na_2$ up to max. | 5 % Mass % |

**Revendications**

1. Procédé pour la fabrication de fibres minérales stables en milieu alcalin, pour la microarmature de liants ou de matériaux de construction, liés au ciment, à la chaux, et/ou au plâtre, ou bitumineux, procédé dans lequel des roches éruptives sont additionnées de $ZrO_2$ et ce mélange est fondu à une température comprise entre 1 350 °C et 1 500 °C, après quoi on fabrique, à partir de la masse fondue, des fibres d'un diamètre de 10 à 20 microns, et on les fait recristalliser au moyen d'un traitement thermique à une température comprise entre 650 et 900 °C, procédé caractérisé en ce que l'on utilise un mélange de roches éruptives, éventuellement avec addition de $TiO_2$, ayant la composition suivante rapportée aux constituants oxydes purs :

| | |
|---|---|
| $SiO_2$ | 48-51 % de masse |
| $Al_2O_3$ | 12-14 % de masse |
| $Fe_2O_3$ | 8-10 % de masse |
| CaO | 6- 8 % de masse |
| MgO | 10-12 % de masse |
| $TiO_2$ | 2- 6 % de masse |
| $ZrO_2$ | 4- 6 % de masse |
| $K_2O + Na_2O$ jusqu'à max. | 5 % de masse |

2. Procédé selon la revendication 1, caractérisé en ce que le $ZrO_2$ est ajouté sous forme de $ZrSiO_4$ (silicate de zirconium).

3. Procédé selon l'une des revendications 1 ou 2, caractérisé en ce que le traitement thermique s'effectue à une température comprise entre 800 et 900 °C ; avec une durée maximale de 1 minute.

4. Procédé selon l'une quelconque des revendications 1 à 3, caractérisé en ce que le traitement thermique s'effectue en deux étapes, la température étant comprise dans la première étape entre 650 et 750 °C et dans la deuxième étape entre 800 et 900 °C.

5. Fibres minérales conformes à celles obtenues par le procédé suivant l'une quelconque des revendications 1 à 4, pour la microarmature de liants ou de matériaux de construction, liés au ciment, à la chaux et/ou au plâtre, ou bitumineux, constituées de $SiO_2$, $Al_2O_3$, $Fe_2O_3$, CaO, MgO, $TiO_2$ et $ZrO_2$, fibres caractérisées en ce qu'elles présentent la composition suivante, exprimée en % de masse :

| | |
|---|---|
| $SiO_2$ | 48-51 |
| $Al_2O_3$ | 12-14 |
| $Fe_2O_3$ | 8-10 |
| CaO | 6- 8 |
| MgO | 10-12 |
| $TiO_2$ | 2- 6 |
| $ZrO_2$ | 4- 6 |
| $K_2O$ + $Na_2O$ jusqu'à max. | 5 |